(19) **Europäisches Patentamt / European Patent Office / Office européen des brevets**

(11) **EP 1 881 155 A1**

(12) **EUROPEAN PATENT APPLICATION**

(43) Date of publication:
**23.01.2008 Bulletin 2008/04**

(51) Int Cl.:
*F01D 5/14* (2006.01)    *F02C 7/00* (2006.01)
*G06F 17/50* (2006.01)

(21) Application number: **06425508.6**

(22) Date of filing: **21.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **ANSALDO ENERGIA S.P.A.**
**16152 Genova (IT)**

(72) Inventors:
• **Cecchi, Stefano**
**17047 Vado Ligure (IT)**
• **Camerlenghi, Nicola**
**16154 Genova Sestri Ponente (IT)**
• **Dacca', Federico**
**16138 Genova (IT)**

(74) Representative: **Bongiovanni, Simone et al**
**Studio Torta S.r.l**
**Via Viotti 9**
**10121 Torino (IT)**

(54) **Apparatus for designing turbines and turbine blades**

(57)    An apparatus for designing turbines and turbine blades includes a plurality of optimisation modules (4-7), configured to perform optimisation procedures of respective predetermined sets of machine parameters, in which the procedures are based on genetic algorithms; and a management module (2) configured to define activation sequences of at least two of the optimisation modules (4-7) and for coordinating the activation of the optimisation modules (4-7) defined according to one of the defined activation sequences.

Fig.1

## Description

The present invention relates to an apparatus for designing turbines and turbine blades.

As known, the complete steam turbine design is an extremely laborious and time consuming procedure, due to the complexity of the system and the high number of thermodynamic, fluid-dynamic and mechanical parameters which must be taken into consideration. In order to reduce design times and costs within acceptable limits, the procedure is normally simplified by using standardised component samples, which are selected so as to comply with the specifications and the constraints related to the thermal cycle to be made. The simplified procedure is adapted to be exploited in industrial context, but does not favour the development of ameliorative solutions, which instead require a specific study and adjustment. On one hand, consequently, the improvement of existing solutions and the extension of available component samples are exclusively intended to research and development activities parallel to design. On the other hand, the simplified procedure is not very flexible, especially when is required the creation of steam turbines whose size is not compatible with the components including the samples. Furthermore, the optimisation of performance and efficiency is possible only within the limits of selection of the best set of components from those available in the samples. In practice, however, it is not possible to obtain a further level of optimisation, although theoretically a margin is available. Similarly, complete conformity to design specifications, just due to the limits of flexibility of the simplified procedure is not always possible.

It is the object of the present invention to make an apparatus for designing turbines and turbine blades which allows to overcome the described limitations.

According to the present invention an apparatus is made for designing turbines and turbine blades as claimed in claim 1.

The present invention will now be described with reference to the accompanying drawings illustrating a non-limitative embodiments, in which:

-    figure 1 is a simplified block diagram of an apparatus for designing turbines and turbine blades according to the present invention;
-    figure 2 is a flow diagram related to the operation of one of the blocks in figure 1; and
-    figures 3-5 are flow diagrams related to procedures implemented by the apparatus in figure 1.

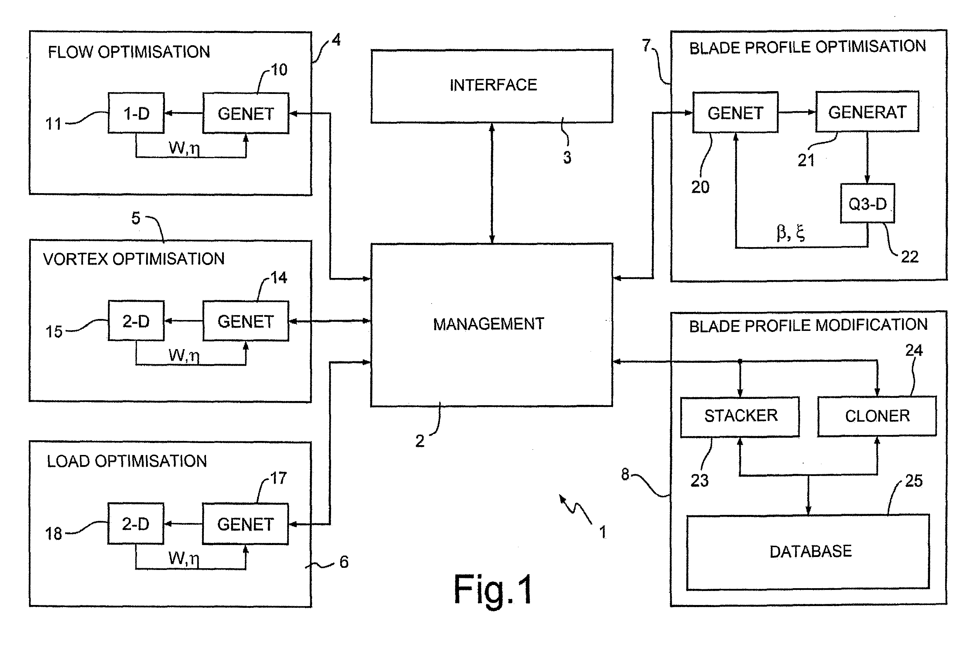

Figure 1 shows an apparatus 1 for designing turbine sections, in particular steam turbines. Apparatus 1 comprises a management module 2, provided with an interface 3, a flow optimisation module 4, a vortex optimisation module 5, a load optimisation module 6, a blade profile optimisation module 7 and a blade profile modifying module 8.

Management module 2 can be controlled by an operator through interface 3 and is configured to activate and coordinate, under the operator's control, the remaining modules 4-8. In particular, interface 3 allows the input of predetermined specifications and design constraints which must be met at the end of the process.

As explained better below, modules 4-8 determine respective thermodynamic, fluid-dynamic and mechanical parameter sets (hereinafter briefly indicated as machine parameters) so as to respect predetermined design specifications and constraints. The machine parameter values determined by apparatus 1 define a turbine or, according to the cases, parts of a turbine which are made available to expand the component samples (in particular, blade profiles).

Furthermore, flow optimisation module 4, vortex optimisation module 5, load optimisation module 6, blade profile optimisation module 7 and blade profile modifying module 8 are mutually coupled in communication, by means of management module 2, to exchange data, in particular optimised machine parameter value sets.

Flow optimisation module 4, vortex optimisation module 5, load optimisation module 6 and blade profile optimisation module 7 are based on the use of genetic algorithms. Genetic algorithms, as known, are research algorithms which are based on the mechanisms of natural selection in a population of individuals. More precisely, given a certain plurality of parameters with predetermined domain variable values, genetic algorithms allow to select combinations of parameter values which maximise a pre-established target function ('fitness') according to the type of parameters and the objective to be obtained by means of optimisation. The individuals are vectors which contain specific combinations of parameter values. Therefore, a respective value of the target function is associated to each individual. Furthermore, the parameters values are normally encoded in a binary format and each digit (binary) represents a gene. The genes of each individual are aggregated into chromosomes, i.e. sequences of predetermined length not necessarily coinciding with the sequences which define the parameter values).

A population is initially generated, for example randomly, by selecting possible combinations of gene values which form the individuals. Thus, the genetic algorithms consequently contemplate reproduction mechanisms, based on recombination of chromosomes of individuals of the population ('cross-over') and mutation of the gene values, and mechanisms of competition and selection, essentially based on the target function value associated with the individuals of the population (in practice in each new generation only the individuals survive, to whom the highest target function values are associated to). The procedure is applied iteratively until it converges on a population of individuals which maximise the target function. The parameter values which form the selected individuals provide the sought solution.

In detail, flow optimisation module 4 is configured to determine a subset of machine parameters, defining a flow path and comprising a genetic module 10 and a mono-dimensional calculation module 11.

Flow optimisation module 4 works at least on the following machine parameters:

number of stages of the turbine;
shape of the flow path (according to a longitudinal axial section along a meridian plane);
cords, input and output angles for the blades of each row of the turbine, both mobile and fixed;
dimensions of the shrouds;
number of labyrinth seals.

Genetic module 10 uses a target function based on a combination of power W and efficiency η of the turbine and on mechanical features so as to account for criteria of fluid-dynamic and thermodynamic efficiency, and of mechanical resistance. Furthermore, the target function is defined so as to penalise parameter values or combinations of parameter values which, for example, for reasons of efficiency or mechanical resistance, must be avoided. For example, the efficiency of the blades increases as the axial cord decreases, however blades with excessively low axial cord are subjected to structural failures and are however difficult to make. Therefore, when determining the value of the target function associated with an individual, a penalisation is introduced if the axial cord is too low, so that the individual will be probably rejected by the selection mechanisms of genetic module 10. Therefore, some solutions characterised by good aerodynamic performance will have to be rejected for reasons of mechanical integrity. This will be performed by imposing a penalisation of the target function.

Starting from an initial population, genetic module 10 produces a new generation of individuals, each of which contains a respective combination of values of all the machine parameters to be optimised. Calculation module 11 calculates power W and efficiency η associated with each individual of each new generation on the basis of free-vortex assumption, using a mono-dimensional calculation of the 'mean-line' type. Powers W and efficiencies η thus determined are returned to genetic module 10, which uses them to calculate respective target function values associated with each individual of the new generation.

In practice, the convergence of the genetic algorithm towards individuals (i.e., combinations of machine parameter values) which maximise the target function ensures that the machine parameter values most responding to the adopted thermodynamic, fluid-dynamic and mechanical optimisation criteria are selected.

The calculation procedure performed by calculation module 11 considers criteria such as quantification of loss levels, mechanical-static blade test, influence of axial pitch-to-cord ratio of the shroud resistance, evaluation of the centrifuge force and axial thrust of the blades.

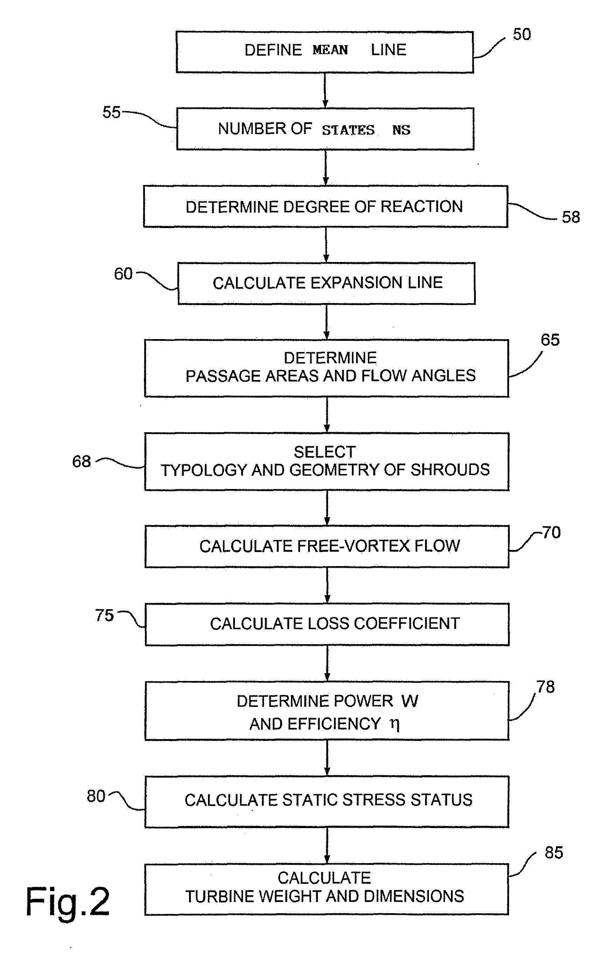

In particular, the procedure contemplates the following steps (figure 2):
definition of a mean line of the turbine (block 50);
selection of the number of states NS on the basis of the available enthalpy difference (block 55);
determination of the degree of reaction of each design stage (block 58);
calculation of the expansion line (block 60);
determination of the passage areas and the flow angles (block 65);
selection of the type of shroud and definition of its geometry (block 68);
free-vortex calculation of the flow at the blade root and tip (block 70);
calculation of row loss coefficients (block 75);
determination of power and efficiency of the turbine (block 78);
calculation of the static stress status on mobile and fixed blades (block 80);
calculation of the weight of the turbine and its overall dimensions (length of the shaft, block 85).

Furthermore, the procedure performed by calculation module 11 is based on relations between machine parameters, which allow to reduce the total number of machine parameters to be optimised. By way of example, average diameter optimisation $D_K$ of the blade rows of the turbine is based on a function of the type:

$$D_K = A_1 + A_2X + A_3X$$

where $A_1$-$A_3$ are the machine parameters to be optimised, K indicates the generic stage and X is a variable, whose value is equal to K for the mobile blades (of the K-th stage) and equal to K-0.5 for fixed blades. Consequently, in practice, the optimisation of only three machine parameters is sufficient to define the mean line of the turbine.

The optimisation processes of vortex optimisation module 5, of load optimisation module 6 and of blade profile optimisation module 7 are performed starting from the flow path defined by flow optimisation module 4 or however on the basis of a predetermined flow path, as explained below.

Vortex optimisation module 5 is configured to optimise the radial distribution of the blade input and output angles, removing the free-vortex flow assumption and using a bi-dimensional process on the meridian plane of the turbine based on a 'through-flow' type code. In particular, vortex optimisation module 5 comprises a genetic module 14 and a bi-dimensional calculation module 15. The optimisation procedure performed by vortex optimisation module 5 is performed repeatedly starting from the first stage (input) and ending with the last stage (exhaust). In each state the radial distribution of input and output angles both of the mobile blades and the fixed blades is optimised. Preferably, the entire procedure is also iterated a predetermined number of times so as to account, in the optimisation of each stage, of the changes introduced in the adjacent stages (in particular in the downstream stages). Indeed, the optimisation procedure of each stage is partially based on data defined during optimisation of the respective upstream stage (e.g. the input angles of a stage may directly result from the output angles of the respective upstream stage). The flow conditions at the output of each stage are not fully known, must be defined by the optimisation procedure and depend in part also on the features of the downstream stage, not yet optimised.

In detail, the radial distribution of the output angle (both for the mobile blades and for the fixed blades) is described by means of a polynomial function of the type:

$$\beta_2 = B_1 + B_2 R + B_3 R^2 + B_4 R^3$$

in which R is the radius at row output (mobile or fixed) and $B_1$-$B_4$ are characteristic coefficients of each row and must be optimised.

The calculation is performed by maintaining unchanged the aerodynamic load and the degree of reaction of each stage, the value of constant B1 is calculated by the genetic system so as to maintain constant the value of the integral:

$$\int_{RH}^{RT} 2\pi R \cos\beta_2 \, dr$$

which defines the aerodynamic throat area (RH and RT indicate the radius at the base and at the tip of the blade, respectively).

The remaining machine parameters $B_2$-$B_4$ are optimised by genetic module 14, which uses a target function based on efficiency η of the turbine. Furthermore, the target function is defined so as to introduce penalisations for combinations of machine parameter values $B_2$-$B_4$ which correspond to output angle values (along the entire radial development of the blade) not compatible with predetermined maximum and minimum limits and with variations of the output angle between the base and the tip of the blades ('twist') higher than a predetermined maximum. Such constraints ensure the practical feasibility of the blades.

Efficiency is calculated by calculation module 15 for each individual of each generation produced by the genetic module 14 on the basis of a 'through-flow' type process.

The procedure deals with the optimisation of one stage at a time, since in this way the number of machine parameters to be optimised and therefore the number of reproduction and selection cycles of the genetic algorithm are much lower than in the case of simultaneous optimisation of the entire turbine.

Load optimisation module 6 is configured to optimise the aerodynamic load associated with each stage by means of a bi-dimensional process on a meridian plane using a 'through-flow' type code. In particular, load optimisation module 6 comprises a genetic module 17 and a bi-dimensional calculation module 18. Load optimisation module 6 is also configured to use both radial distributions of input and output angles determined by vortex optimisation module 5, and also other predetermined distributions (e.g., distributions of previously installed turbines, for which a ameliorative intervention contemplating the design of a new blade system is required). The process run by load optimisation module 6 modifies the mean value of the output angle of the mobile and fixed blade rows, which determines the aerodynamic load, and operates simultaneously on the entire turbine. The number of machine parameters to be optimised is therefore equal to the number of rows (mobile and fixed) present in the turbine. In this case, the flow angle of the generic row is defined by the ratio:

$$\beta_{2K}(R) = C + \beta_{2KREF}(R)$$

where $\beta_{2REF}(R)$ is a reference output angle of a row of mobile or fixed blades of the K-th stage at the beginning of optimisation, R is the radius at the concerned row output and C is a specific numeric constant of the row itself.

The target function is, also in this case, based on the efficiency η of the turbine, which is determined by calculation module 18. Furthermore, the target function introduces penalisations so as to limit output angle $\beta_2$ and avoid compromising the practical feasibility of the blades.

Blade profile optimisation module 7 completes the aerodynamic profile optimisation of the blades, respecting the radial distributions of input and output angles determined by vortex optimisation module 5 and by load optimisation module 6 (or also by other predefined radial distributions) and mechanical integrity and practical feasibility constraints. In particular, blade profile optimisation module 7 is configured to generate blade profiles with different radius between root and tip of the blades, for each row of mobile and fixed blades, and, for this purpose, comprises a genetic module 20, a blade profile generator 21 and a calculation module 22 of the Q3-D type.

Genetic module 20 works using populations of individuals defined by the input and output angles and by the axial cord of each blade section, by the number of blades of each row and, furthermore, by the data resulting from static calculation of the blade, such as the metallic area and the main inertial moments of the blade section, and possibly, restrictions concerning some geometric parameters of the profile (thickness, pitch angles). The target function exploited by genetic module 20 is a linear combination of the efficiency of each row (given by 1-ξ, where ξ is the energy loss coefficient associated with the row) and the output angle deviation with respect to design value.

Starting from each individual in the population produced by genetic module 20, blade profile generator 21 determines corresponding aerodynamic profiles in an intrinsically known way. Therefore, the aerodynamic profiles are analysed by calculation module 22 by means of a process based on a Q3-D type aerodynamic code, which allows to evaluate the static pressure distribution on each profile, the output angles and the energy loss coefficient ξ. When processing Q3-D related to a row of blades, in particular, a 'blade-to-blade' type calculation is performed using also the results produced by a meridian 'through-flow' type algorithm, also considering the variations of radius and thickness of the flow tube between input and output of the row itself. The meridian 'through-flow' calculation produces in practice radius and thickness variations of the flow tube, the input angle and the output Mach number. This values are used in the 'blade-to-blade' calculation which determines the output angle and the losses.

Blade profile modifying module 8 is configured to generate modified blade profiles from predetermined blade profiles. For this purpose, blade profile modifying module 8 comprises a stacker module 23, a cloner module 24, activatable alternatively or in sequence, and a database 25, in which predetermined blade profiles are stored.

Stacker module 23 is configured to stack, in an intrinsically known way, profiles corresponding to blade sections with different radiuses (e.g., from five to nine predetermined radius sections). The profiles may be either retrieved from database 25 or generated by blade profile optimisation module 7. In particular, stacker module 23 uses the axial cord values, the number of blades and the radial distribution of the output angle of the row obtained by means of vortex optimisation module 5 or previously known values. For each selected radial position, stacker module 23 defines a reference section and applies to its operations of scaling and rotating. The scale and rotation factors may be calculated by interpolation of tables having the axial pitch-to-cord ratio and the output angle.

Cloner module 24 is configured to perform a so-called cloning procedure, of a known type, starting from a 'parent' blade profile. In practice, the cloning procedure allows to preserve in cloned profiles the same aerodynamic features of the parent profile, in particular its curvature distribution. At the same time, the cloning procedure allows to vary some parameters, such as the input angles or the thickness.

Flow optimisation module 4, vortex optimisation profile 5, load optimisation profile 6, blade profile optimisation profile 7 and blade profile modification module 8 may be selectively activated by means of management profile 2 according to the process type which must be performed.

The described apparatus takes advantage of the module structure and allows to obtain high flexibility of use. For this purpose, management module 2 is configured to allow an operator to define design procedures in the form of predetermined activation sequences of two or more modules. Management module 2 coordinates, preferably under the operator's control, the activation of modules 4-8 in the sequence corresponding to one of the two defined procedures. By way of example, figures 2-4 show possible turbine design procedures based on the use of apparatus 1.

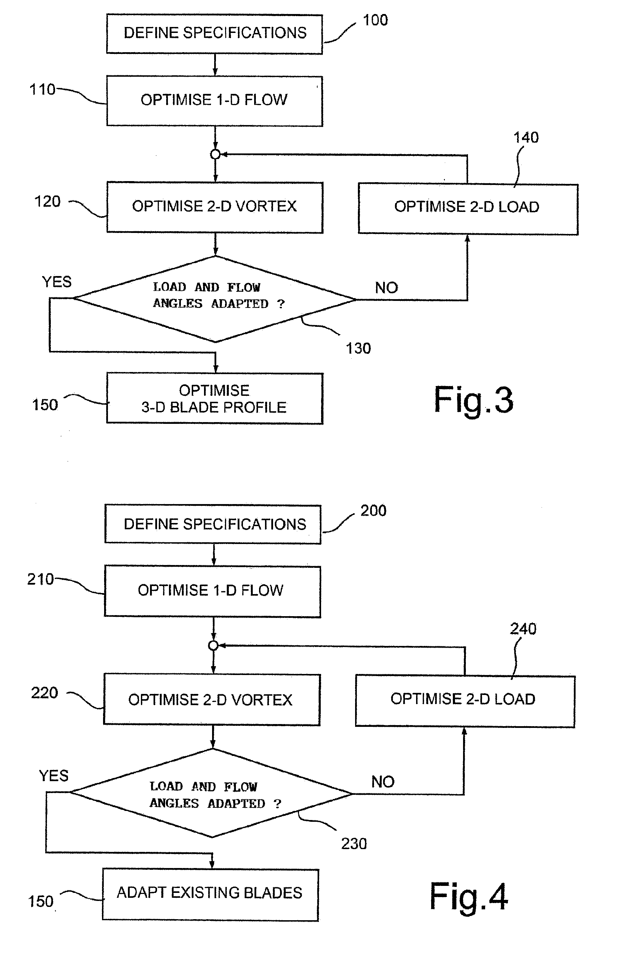

The procedure in figure 3 relates to the complete design of a steam turbine. Firstly (block 100), a set of design specifications and mechanical constraints which need to be met are defined.

Then (block 110), flow optimisation module 4 is activated to define the flow path by mono-dimensional process of fluid-dynamic, geometric and mechanical machine parameters, as explained above.

Once optimisation of the flow path is completed, vortex optimisation module 5 (block 120) is activated and a first bi-dimensional processing of the input and output angles of each row of blades is performed.

If the load and radial distributions of the input and output angles do not allow to meet the specifications (NO output of block 130), load optimisation module 6 is activated to perform a second bi-dimensional process. Preferably, after optimising the aerodynamic load, the bi-dimensional vortex optimisation procedure (block 120) is iterated again.

If the load and input and output angle configuration is compatible with the specifications (YES output from block 130), blade profile optimisation module 7 (block 150) is activated by management module 2.

The procedure shown in figure 4 contemplates the definition of specifications (block 200), the activation of flow optimisation module 4 (block 210) and of vortex optimisation module 5 (block 220), the check of compliance to specifications of the load and input and output angles (block 130), and the activation of load optimisation module 6 (block 140) and the iteration of the vortex optimisation (block 120) in the case of negative result of the check, essentially as described with reference to figure 2. In the case of positive result of the check, instead, blade profile modifying module 8 is activated.

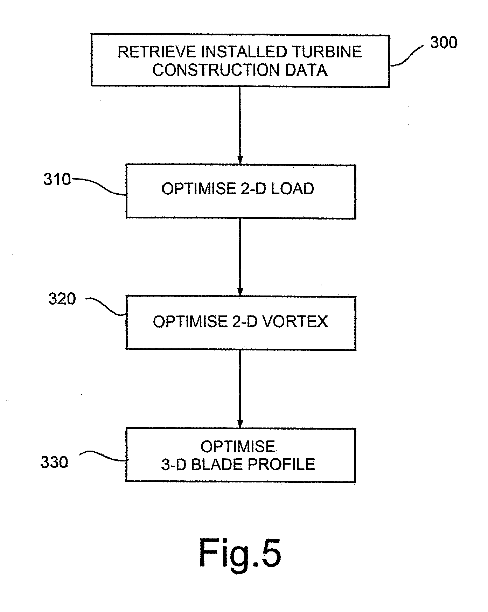

Figure 5 shows an optimisation procedure of a existing turbine ('retrofitting') . Firstly (block 300), the constructive data of a previously installed turbine are retrieved and entered.

Then (block 310), load optimisation module 6 is activated and supplied with data related to the vortex (number of stages, input and output angles of each row of blades) of the existing turbine to be optimised.

Subsequently, vortex optimisation module 5 (block 320) and finally blade profile optimisation module 7 (block 300) are activated in sequence; alternatively, blade profile modifying module 8) is activated in sequence.

The use of genetic algorithms is particularly effective and allows to identify the sets of machine parameter values which maximise a target function, also considering the limits and constraints which have to be complied with. It is therefore possible to *a priori* exclude or penalise solutions considered disadvantageous, simply by setting low target function values to particular combinations of machine parameters.

The validity and the correspondence of the identified solution to design specifications may also be continuously observed, by verifying base performance according to machine parameters optimised on a case-by-case basis.

It is finally apparent that changes and variations can be made to the apparatus described and illustrated without departing from the scope of the invention, as defined in the accompanying claims.

**Claims**

1. An apparatus for designing turbines and turbine blades comprising:

   a plurality of optimisation modules (4-7), configured to perform optimisation procedures of respective predetermined sets of machine parameters, wherein the procedures are based on genetic algorithms; and
   a management module (2) configured to define activation sequences of at least two optimisation modules (4-7) and to coordinate the activation of optimisation modules (4-7) according to one of the defined activation sequences.

2. An apparatus according to claim 1, wherein the optimisation modules (4-7) comprise a flow optimisation module (4), configured so as to perform an optimisation procedure of a subset of machine parameters defining a flow path.

3. An apparatus according to claim 2, wherein the flow optimisation module (4) comprises a respective genetic module (10) and a respective calculation module (11), configured to perform a mono-dimensional calculation procedure of the 'mean-line' type, on the basis of a free-vortex assumption and of machine parameter values defining a flow path.

4. An apparatus according to claim 3, wherein the machine parameters defining a flow path comprise: a number of stages, a flow path shape, cords, blade input and output angles, shroud dimensions and number of labyrinth seals.

5. An apparatus according to any of the preceding claims, wherein the optimisation modules (4-7) comprise a vortex optimisation module (5), configured to perform an optimisation procedure of a radial distribution of blade input and output angles.

6. An apparatus according to claim 5, wherein the vortex optimisation module (5) comprises a respective genetic module (14) and a respective calculation module (15), configured to perform mono-dimensional calculation procedure of the "through-flow" type and a subset of machine parameters defining blade output angles.

7. An apparatus according to any of the preceding claims, wherein the optimisation modules (4-7) comprise a load optimisation module (6), configured to perform an optimisation procedure of an aerodynamic load associated with turbine stages.

8. An apparatus according to claim 7, wherein the load optimisation module (6) comprises a respective genetic module (17) and a respective calculation module (18), configured to perform a bi-dimensional calculation procedure of the 'through-flow' type.

9. An apparatus according to any of the preceding claims, wherein the optimisation modules (4-7) comprise a blade profile optimisation module (7), configured to generate blade profiles with different radiuses between blade root and blade tip.

10. An apparatus according to claim 9, wherein the blade profile optimisation module (7) comprises a genetic module (20) and a calculation module (22), configured to run a bi-dimensional calculation of the Q3-D type.

11. An apparatus according to any of the preceding claims, comprising a blade profile modifying module (8), configured to generate modified blade profiles from predetermined blade profiles.

12. An apparatus according to claim 11, wherein the blade profile modification module (8) comprises a stacker module (23), a cloner module (24), activatable both alternatively and in sequence by the management module (2) and a database (25) in which predetermined blade profiles are stored.

13. An apparatus according to claim 12, wherein the stacker module (23) is configured to stack the profiles corresponding to blade sections with different radius by scaling and rotating operations.

14. An apparatus according to any of the preceding claims, wherein the optimisation modules (4-7) are mutually coupled in communication, by the management module (2), for exchanging sets of optimisation machine parameter values.

Fig.1

```
┌─────────────────────────────────┐
│      DEFINE MEAN LINE           │──── 50
└─────────────────────────────────┘
              │
              ▼
55 ──┌─────────────────────────────────┐
     │     NUMBER OF STATES NS          │
     └─────────────────────────────────┘
              │
              ▼
┌─────────────────────────────────┐
│   DETERMINE DEGREE OF REACTION  │──── 58
└─────────────────────────────────┘
              │
              ▼
60 ──┌─────────────────────────────────┐
     │     CALCULATE EXPANSION LINE     │
     └─────────────────────────────────┘
              │
              ▼
┌─────────────────────────────────┐
│          DETERMINE              │──── 65
│  PASSAGE AREAS AND FLOW ANGLES  │
└─────────────────────────────────┘
              │
              ▼
68 ──┌─────────────────────────────────┐
     │           SELECT                 │
     │ TYPOLOGY AND GEOMETRY OF SHROUDS │
     └─────────────────────────────────┘
              │
              ▼
┌─────────────────────────────────┐
│   CALCULATE FREE-VORTEX FLOW    │──── 70
└─────────────────────────────────┘
              │
              ▼
75 ──┌─────────────────────────────────┐
     │   CALCULATE LOSS COEFFICIENT     │
     └─────────────────────────────────┘
              │
              ▼
┌─────────────────────────────────┐
│      DETERMINE POWER W          │──── 78
│      AND EFFICIENCY η           │
└─────────────────────────────────┘
              │
              ▼
80 ──┌─────────────────────────────────┐
     │  CALCULATE STATIC STRESS STATUS  │
     └─────────────────────────────────┘
              │
              ▼
┌─────────────────────────────────┐
│          CALCULATE              │──── 85
│ TURBINE WEIGHT AND DIMENSIONS   │
└─────────────────────────────────┘
```

# Fig.2

DEFINE SPECIFICATIONS — 100

110 — OPTIMISE 1-D FLOW

120 — OPTIMISE 2-D VORTEX

140 — OPTIMISE 2-D LOAD

YES ← LOAD AND FLOW ANGLES ADAPTED ? → NO — 130

150 — OPTIMISE 3-D BLADE PROFILE

Fig.3

DEFINE SPECIFICATIONS — 200

210 — OPTIMISE 1-D FLOW

220 — OPTIMISE 2-D VORTEX

240 — OPTIMISE 2-D LOAD

YES ← LOAD AND FLOW ANGLES ADAPTED ? → NO — 230

150 — ADAPT EXISTING BLADES

Fig.4

```
┌─────────────────────────────┐
│  RETRIEVE INSTALLED TURBINE │ ─── 300
│      CONSTRUCTION DATA      │
└─────────────────────────────┘
              │
              ▼
┌─────────────────────────────┐
310 ───      OPTIMISE 2-D LOAD        │
└─────────────────────────────┘
              │
              ▼
┌─────────────────────────────┐
320 ───     OPTIMISE 2-D VORTEX      │
└─────────────────────────────┘
              │
              ▼
┌─────────────────────────────┐
│          OPTIMISE           │
330 ───     3-D BLADE PROFILE        │
└─────────────────────────────┘
```

# Fig.5

## EUROPEAN SEARCH REPORT

European Patent Office

Application Number

EP 06 42 5508

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAKOB AXELSSON: "TURBINE PRELIMINARY DESIGN USING GENETIC ALGORITHMS (REPORT N. LITH-IDA-EX-9302)" TECHNICAL REPORT. INSTITUTIONEN FOER DATAVETENSKAP. DEPARTMENT OF COMPUTER AND INFORMATION SCIENCE. UNIVERSITETET I LINKOEPING, LINKOEPING UNIVERSITY,, SE, 14 December 1992 (1992-12-14), page 61PP, XP009083989 * the whole document * | 1-14 | INV. F01D5/14 F02C7/00 G06F17/50 |
| X | HAJELA AND J LEE P: "GENETIC ALGORITHMS IN MULTIDISCIPLINARY ROTORBLADE DESIGN" PROCEEDINGS STRUCTURES, STRUCTURAL DYNAMICS AND MATERIALS CONFERENCE, XX, XX, vol. 36TH, no. PART 4, 10 April 1995 (1995-04-10), pages 2187-2197, XP009083672 * the whole document * | 1-14 | |
| A | DIMEO R M ET AL: "Genetics-based control of a MIMO boiler-turbine plant" DECISION AND CONTROL, 1994., PROCEEDINGS OF THE 33RD IEEE CONFERENCE ON LAKE BUENA VISTA, FL, USA 14-16 DEC. 1994, NEW YORK, NY, USA,IEEE, US, vol. 4, 14 December 1994 (1994-12-14), pages 3512-3517, XP010145048 ISBN: 0-7803-1968-0 * the whole document * | 1-14 | TECHNICAL FIELDS SEARCHED (IPC) F01D F02C G06F |

-/--

The present search report has been drawn up for all claims

| Place of search | Date of completion of the search | Examiner |
|---|---|---|
| Munich | 14 June 2007 | Zerf, Georges |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 881 155 A1

**European Patent Office**

**EUROPEAN SEARCH REPORT**

Application Number

EP 06 42 5508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AXMANN J K ET AL: "OPTIMIERUNG VON KRAFTWERKEN MIT EVOLUTIONAEREN ALGORITHMEN" BWK BRENNSTOFF WARME KRAFT, SPRINGER VDI VERLAG, DUSSELDORF, DE, vol. 49, no. 7, July 1997 (1997-07), pages 46-49, XP000658976 ISSN: 1618-193X * the whole document * | 1-14 | |
| A | OTTE R ET AL: "DYNAMISCHE NEURONALE REFERENZ-MODELLE ZUR PROZESSUEBERWACHUNG" VGB KRAFTWERKSTECHNIK, VGB KRAFTWERKSTECHNIK GMBH. ESSEN, DE, vol. 78, no. 5, 1998, pages 112-117, XP000742276 ISSN: 0372-5715 * the whole document * | 1-14 | |
| A | JP 2003 233641 A (MITSUBISHI HEAVY IND LTD) 22 August 2003 (2003-08-22) * abstract * | 1-14 | TECHNICAL FIELDS SEARCHED (IPC) |
| A | EP 1 528 240 A (HITACHI LTD [JP]) 4 May 2005 (2005-05-04) * paragraph [0009] - paragraph [0041]; claims; figures * * abstract * | 1-14 | |

The present search report has been drawn up for all claims

| Place of search | Date of completion of the search | Examiner |
|---|---|---|
| Munich | 14 June 2007 | Zerf, Georges |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 42 5508

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2007

| Patent document cited in search report | Publication date | Patent family member(s) | Publication date |
|---|---|---|---|
| JP 2003233641 A | 22-08-2003 | NONE | |
| EP 1528240 A | 04-05-2005 | US 2005223708 A1 | 13-10-2005 |

EPO FORM P0459

For more details about this annex : see Official Journal of the European Patent Office, No. 12/82